# EUROPEAN PATENT APPLICATION

(11) **EP 4 851 598 A1**
(43) Date of publication of application: **09.12.2026**
(21) Application number: 25181211.1
(22) Date of filing: 05.06.2025
(51) Int. Cl.: G01M 17/02, B60C 99/00

(54) **ADVANCED NUMERICAL MODELING OF TIRES FOR IN-VEHICLE NOISE ESTIMATION**

(71) Applicant: BRIDGESTONE CORPORATION, Chuo-ku Tokyo 104-8340 (JP)
(72) Inventor: DA SILVA CÉSAR, Helou Teodoro, 00128 Roma (IT)
(74) Representative: Marks & Clerk LLP

(57) **Abstract**

The present invention relates to a method for generating a vehicle independent numerical model of a tire for predicting the contribution of structure-borne noise and vibration caused by tire forces and moments in a vehicle under operative conditions including the tire installed on a wheel of the vehicle. The invention further relates to a method of estimating structure-borne noise and vibration in a moving vehicle at each of a plurality of frequencies.

## Description

### [Technical field]

The present invention relates to a method for generating a numerical model of a tire for predicting the contribution of the tire to cabin noise in a vehicle including the tire installed on a wheel of the vehicle, and to a method of estimating a level of cabin noise in a moving vehicle at each of a plurality of frequencies.

### [Background]

In original equipment manufacturer (OEM) vehicle development, Noise, Vibration & Harshness (NVH) performance is treated as a multi-path system where structure-borne noise (SBN) is propagated from road impact-induced excitations-primarily via the tires-through the vehicle's chassis into the cabin. As automakers aim to reduce weight and cost, tires increasingly carry performance burdens, not only for dynamics and rolling resistance but also for interior noise and comfort.

In addition to the ongoing motivation to refine the new tire development process and meet critical yet conflicting vehicle targets with the latest technologies in tire design and manufacturing, the current transition towards electrification in OEMs' vehicle architectures-specifically for hybrid and electric vehicles (EVs)-redefines the contemporary NVH challenges. The variety of powertrain options, including the reduction of internal combustion engines (ICE), pushes tires to be a primary noise source. This new landscape requires attention to refine targets while simultaneously managing the heavier load conditions imposed by vehicle batteries, while maintaining controlled NVH and ride comfort. The electrification era of incorporating battery designs complexities into chassis and body platforms strategies is also evolving to keep pace with the new industry costs, associated with a competitive globalized market. Given all this, the vehicle systems related to structure-borne noise do not exhibit a predictable or stable architectural synergy with tire design effects, highlighting the need for improved NVH performance control from the initial tire development.

Furthermore, from the tire manufacturers' perspective, as the vehicle prototypes are not usually available, the only viable way to measure tire-related road-induced forces during rolling is using a test rig which does not require a vehicle body. Various test rigs, using curved or flat contact, are known and, when equipped with replicas of road surface roughness, the test rig can emulate road behaviour, enabling tests at controlled speeds in environmental conditions, aligning with typical vehicle conditions.

However, years of practice have shown that, in general, a good tire performance in indoor bench testing does not guarantee acceptable results at an in-vehicle level, especially in NVH. Undesired interior vehicle noise can arise unexpectedly, even when tire forces appear to be aligned with the required overall levels. Conversely, a tire with higher bench-measured forces may perform better in a specific vehicle platform. Without proper coupling between bench and vehicle domains, tire development becomes a trial-and-error process-often performed late in a development timeline, leading to design compromises, homologation delays, and increased costs.

The known classical transfer path analysis techniques, including the latest component-based TPA, as seen in ISO20270, cannot use tire test rig force responses to reflect in-vehicle dynamic responses influenced by the test rig's resonances; do not align with vehicle-side SBN targets in relevant speeds, force axis directions, or frequency priorities; and so cannot be directly used to simulate in-vehicle road noise or support virtual development workflows.

Vehicle development experience shows that car body types, chassis layout, wheel design, tire temperature, track surfaces and general environmental conditions on tracks dramatically affect NVH vehicle results-even for identical tire specifications. Transfer Path Analysis (TPA) is commonly used by OEMs to simulate impact-induced road-contact noise through the chassis (source) and the body structures of the vehicle which function as the physical paths for noise. This involves assembling a full vehicle (including a chassis and wheels), identifying all possible individual contribution responses (acoustic or structural) which appear to be of greatest importance, identifying the attachment points at which load may be transferred between structural components of the vehicle, setting up a frequency response analysis to calculate the forces acting on the attachment points, and obtaining transfer functions (TF) between the attachment points to a grid of response points inside the vehicle, called targets - set of goals of noise and vibration references.

A recent TPA extension, generically referred to as Component-Based TPA (C-TPA), aims to use bench test data in combination with vehicle data in such a way that the prototype parts and their force effects, as new sources, can be virtually checked for their contribution to vehicle paths in advance, predicting the new total target levels before their actual assembly. However, C-TPA was developed with static components in mind, such as engines and motors. Its methodology assumes fixed-body excitation and measurement interfaces-concepts that do not translate well to rotating, deforming components like tires. Existing commercial tools and publications from OEMs often lack tire-specific modelling, making their C-TPA results poorly correlated with real vehicle performance.

This limitation has been acknowledged in more recent developments. For instance, Goodyear and Siemens proposed a combined approach using rig and indoor vehicle data to estimate blocked forces in rolling conditions, as published in the Journal of Sound and Vibration 523 (2022) [116694]. Their methodology builds on the foundational substructuring framework described by Van der Seijs et al. (2016), which classifies TPA techniques and introduces component-based transfer path analysis modelling. Therefore, despite its relevance for rigid body systems, this framework was not originally designed to address the elastic, speed-load-temperature-dependent behaviour of tires under rolling conditions. The Goodyear-Siemens implementation, while innovative, remains limited by in-situ assumptions to extract the so-called "blocked forces" from the vehicle and yet from only one corner transfer function interface, presents only low phenomena at 20kph speed results that are easier to correlate in the TPA environment, and does not decouple the structural dynamics of the tire from the measurement interface from the rig effects.

As a result, tire-induced NVH issues, such as broadband structure-borne noise generated by road texture, low frequency rumble resembling spindle bearing failure, cavity resonance due to internal air volume of the tire, and noise modulation patterns associated with carcass vibration and tread geometry- are typically detected only during final prototype integration, when short-term countermeasures are more difficult to implement. Furthermore, the validation of current blocked forces methods for tire application are not well aligned with tire testing reality. Finally, there is also no connection to virtualization of the tire as a vehicle-independent tire model, to be the source data in Vehicle NVH simulation in the early development process.

### [Summary of invention]

In general terms, a first aspect of the disclosure relates to obtaining a numerical model of a tire directly using a test rig which is operative to rotate a tire against a testing surface (when not connected to a vehicle suspension system and not connected to a vehicle chassis). This aspect proposes that data describing a frequency response function of the tire test rig (under or close to operative conditions) is also used to numerically correct experimental data collected when the test rig is used to rotate a tire against a testing surface and describing at least one force and/or at least one moment resulting from the tire rotating against the testing surface. The correction has the effect of estimating "blocked tire data", that is, data which is substantially independent of the test rig and descriptive of the tire when rotated about a substantially static support. The resulting numerical model is vehicle-independent, since no vehicle was connected to the test rig when the experimental data was collected. It has been found experimentally that the obtained numerical model can be used for predicting noise levels in a variety of vehicles with a certain level of accuracy.

A specific expression of this aspect is a method for generating a vehicle-independent numerical model of a tire for predicting the contribution of structure-borne noise and vibration caused by the tire forces and moments in a vehicle under operating conditions (that is, driving conditions) in which the tire is installed on a wheel of the vehicle. The method comprises obtaining a frequency response function (FRF_{rig}) of a test rig for the tire (the test rig not being connected to a vehicle chassis, or even a vehicle wheel hub, at the time); using the test rig to rotate the tire against a contact testing surface and measuring forces and moments resulting from the tire rotating against the contact testing surface; calculating blocked forces of the tire, wherein said blocked forces are calculated by subtracting a contribution made by the test rig to the measured forces and moments resulting from the tire rotating against the contact testing surface, said removal being performed by using the measured frequency response function of the test rig; and generating a numerical model of the tire using the blocked forces.

With the above method, accurate blocked force extraction is performed and virtual tire development with NVH capability is enabled, allowing for the contribution of tires to NVH to be accurately modelled.

The method may further comprise measuring the frequency response function (FRF_{rig}) of the test rig itself experimentally (when connected or not to the tire) or receiving the frequency response function of the test rig residual contribution from a database. The experiment is performed at a time when the test rig is not subject to forces and moments generated by the tire which emulate the forces and moments which the tire generates in use when the tire is attached to the wheel of a vehicle. By measuring the frequency response function of the test rig in such conditions - e.g., when it is not connected to a tire, or when it is connected to the tire but when the tire is not generating the forces which it generates in use (e.g. because the tire is substantially not loaded, i.e. not being pressed with a force, or at least not with a force resembling the weight of a vehicle (e.g. over 500N), against a surface to emulate the ground), operating closer to real-world conditions - the contribution made by the test rig to the measured forces and moments resulting from the tire rotating against the testing surface is more accurately determined.

Note that tire test rigs are commonly used by tire manufacturers for checking tire performance. The present inventors are not aware of the effects of such an indoor system being included in the framework for transfer path analyses methods. Test rigs are seen as a direct way to obtain blocked forces in the current literature. At the same time, In-situ indirect blocked methods focus on vehicle modal behaviour extraction, with higher risks of vehicle modal behaviour contamination. The inventors concentrated on an indirect blocked force extraction from a specialized, stiff, and isolated test rig, which is more aligned with a perfect simulation environment and has a lower risk of rig modal contamination, especially for tire application.

The method may further comprise maintaining at least one of tire pressure or temperature, air temperature and humidity at a pre-determined values during said measurement of the forces and moments resulting from the tire rotating against the contact testing surface, for given combinations of speeds in steady state and variable conditions, vehicle's weight loads of all four corners, and their camber with slip angle ranges representing the possible vehicle passenger characteristics, enabling real-world driving conditions to be further emulated.

The method may further comprise experimentally obtaining modal behaviour of the tire (i.e. modal behaviour data), by application of short-duration impact excitations using an impulse hammer to the tire or by using a dynamic shaker with a white noise signal as input signal on the tire, and updating the numerical model of the tire using the obtained modal behaviour such as displacement, velocities, accelerations, as well forces, as output. Both the impulse hammers and white noise shakers offer broadband excitation, meaning they generate a wide range of frequencies simultaneously. The Frequency Response Function (FRF) is used to identify the resonant frequencies, damping and mode shapes of a physical structure. Sometimes referred to as a "transfer function" between the input and output.

The extraction of blocked forces may be carried out independently, while the modal behaviour is used to characterize the tire dynamics for coupling with the vehicle model. Furthermore, the modal behaviour of the tire may be obtained experimentally under loaded conditions using a dedicated support without a spindle. Thus, the tire is not rotating, named as a free-loaded conditions (free from the spindle, yet loaded). Alternatively, the modal behaviour may be obtained when the tire is under loaded and rotating conditions, e.g., using the same test rig employed for blocked forces extraction, connected to a spindle while it can be rotating (called fixed-loaded conditions) . The updating of the numerical model of forces and moments in relevant conditions, using the obtained modal behaviour, results in an improved and more accurate numerical model representation of the tire, leading to more reliable noise and vibration predictions when using the numerical model.

The modal behaviour may be measured by using a plurality of accelerometers located on the wheel assembly of the tire, or on the tire itself, and the method may further comprise optimising respective estimated positions of the accelerometers by iteratively reducing a numerical measure of discrepancy between measurements made by the accelerometers and numerical estimates of those measurements which depend upon the respective estimated positions of the accelerometers. This process may further account for reciprocity between transfer paths and may optionally include a loop based on geometry variation imposition to find optimization using model reduction of numerical virtual point transformations to refine the interface connection dynamics.

Specifically, the numerical estimate of the measurements made by a given first one of the accelerometers may be obtained using the measurements made by a second of the accelerometers and a calculated transfer function from the estimated position of the second accelerometer to the estimated position of the first accelerometer. A function including a term indicating the discrepancy between the actual measurements by the first one of the accelerometers, and the numerical estimate of those measurements, may be defined as a function of the respective estimated positions of the accelerometers. This function may be iteratively reduced to improve the estimated positions at the virtual centre of the tire and wheel assembly in interface with the vehicle hub. A corresponding term may be provided for more than one of the accelerometers. Advantageously, these steps minimise mechanical mounting errors of accelerometers and prevent the use of poor-quality data when performing the virtual point transformation.

Alternatively, the modal behaviour of the tire may be obtained under virtual experimental load conditions (i.e. in a computational simulation), removing the need for a real-world experimental setup.

A second aspect of the disclosure relates to a method for estimating the level of noise in a moving vehicle at each of a plurality of frequencies, comprising applying a numerical transfer function, indicative of noise in a moving vehicle for each of a plurality of frequences given forces and moments applied by a tire to the vehicle, to a numerical model of the tire. The numerical model may be one obtained using the first aspect of the disclosure, including experimental factors as test rig and/or wheels FRF corrections, or a numerical model obtained in another way, such as a numerical model created computationally based on design data parameters of the tire e.g., replacing or bypassing experimental measurements with predictive or parametric estimations.

A specific expression of the second aspect is a method of estimating structure-borne noise and vibration in a moving vehicle at each of a plurality of frequencies, comprising obtaining a vehicle-independent numerical model of a first tire; obtaining a numerical transfer function indicating the cabin noise in a moving vehicle caused by forces and moments generated by the first tire installed on a first wheel of the vehicle at each of the plurality of frequencies; and obtaining the estimated level of noise in the moving vehicle caused by the first tire installed on the first wheel of the vehicle by applying the numerical transfer function to the numerical model of the first tire. To put this another way, the numerical transfer function indicates, for each frequency, a level of cabin noise of that frequency for any given level of forces and moments of that frequency generated by the first tire when the first tire is installed on the first wheel of the vehicle; that is, the numerical transfer function measures the amount of noise in the interior of the cabin of the vehicle body caused by any given forces and moments applied by the tire to the hub.

By using a vehicle-independent numerical model of a tire to estimate structure-borne noise and vibration in a moving vehicle at each of a plurality of frequencies, a more accurate estimation of the NVH in a vehicle with the tire which has been modelled can be obtained. This allows for accurate predictions of NVH and a reduction in the late discovery of NVH issues- vehicle's structure-borne noise phenomena like low frequency road noise, rumble, cavity resonance, and tread modulation previously described.

The method may further comprise obtaining a vehicle-independent numerical model of a tire (optionally, but not necessarily, a second tire different from the first tire); obtaining a second numerical transfer function indicating the noise in the moving vehicle caused by a tire installed on a second wheel of the vehicle at each of the plurality of frequencies; and obtaining the estimated level of the cabin noise in the moving vehicle caused by the tire installed on the second wheel of the vehicle by applying the second numerical transfer function to the numerical model of the tire.

The method may further comprise obtaining a vehicle-independent numerical model of a tire (optionally, but not necessarily, a third tire different from the first and/or the second tire); obtaining a third numerical transfer function indicating the noise in the moving vehicle caused by the tire installed on a third wheel of the vehicle at each of the plurality of frequencies; and obtaining the estimated level of the cabin noise in the moving vehicle caused by the tire installed on the third wheel of the vehicle by applying the third numerical transfer function to the numerical model of the tire. In other words, the noise estimation can estimate structure-borne noise and vibration in a cabin of a moving vehicle at each of a plurality of frequencies in which there are two different types of tires attached to corresponding hubs of the vehicle.

The method may further comprise obtaining a vehicle-independent numerical model of a tire (optionally, but not necessarily, a fourth tire different from the first, the second and/or the third tire); obtaining a fourth numerical transfer function indicating the noise in the moving vehicle caused by a tire installed on a fourth wheel of the vehicle at each of the plurality of frequencies; and obtaining the estimated level of the cabin noise in the moving vehicle caused by the tire installed on the fourth wheel of the vehicle by applying the fourth numerical transfer function to the numerical model of the second tire. In other words, the noise estimation can estimate structure-borne noise and vibration in a cabin of a moving vehicle at each of a plurality of frequencies in which there are two different types of tires attached to corresponding ones of the wheels (hubs) of the vehicle (e.g., one of the two types of tire on the front two hubs, corresponding to the first and second numerical transfer functions, and the other of the two types of tire on the rear two hubs, corresponding to the third and fourth numerical transfer functions).

The vehicle-independent numerical model of the tire may be generated according to the method of the first aspect, or it may be generated computationally based on design data for the tire, and/or it may be received from a database.

The numerical transfer function of a vehicle may be obtained by obtaining the frequency response function (FRF_{car}) of a hub of the vehicle body, obtaining the noise transfer function (NTF_{car}) from the hub to an interior of the cabin of the vehicle body, and obtaining the numerical transfer function based on the frequency response function (FRF_{car}) of the hub of the vehicle body, and the noise transfer function (NTF_{car}) to the vehicle body from the hub to the interior of the cabin of the vehicle body. The method may further comprise obtaining the frequency response function (FRF_{car}) of the hub, connecting the dynamics of vehicle's spindle to the body; and obtaining the noise transfer function (NTF_{car}) from the same hub to one or more interior cabin or structural targets points. These measurements may be performed under static or in movement of suspended chassis conditions to preserve representative of suspension geometry and non linear effects while isolating vehicle boundary effects.

The present application therefore redefines how tire data is measured, virtualized, and coupled into vehicle-level NVH simulation. A goal of the present application is to exploit the predictive potential of the tire test rig and replicas of road surfaces test data through accurate blocked force extraction and enable virtual tire design and development (VTD) with NVH capabilities. As a result, tires-as NVH sources-can be modelled, tuned, and validated entirely in a virtual simulation environment, including among, other virtual systems, the integration into driving simulators.

### [Brief description of the drawings]

Figure 1 illustrates a flow diagram according to a first embodiment of the present invention;
Figure 2 illustrates a flow diagram according to the first embodiment;
Figure 3 illustrates a flow diagram according to the first embodiment;
Figure 4 illustrates a flow diagram according to a second embodiment of the present invention;
Figure 5 illustrates a flow diagram according to the second embodiment; and
Figures 6a and 6b compare a prediction ("Estimated") made by a method which is an embodiment of the present invention, with experimental data ("Measured").

### [Detailed description]

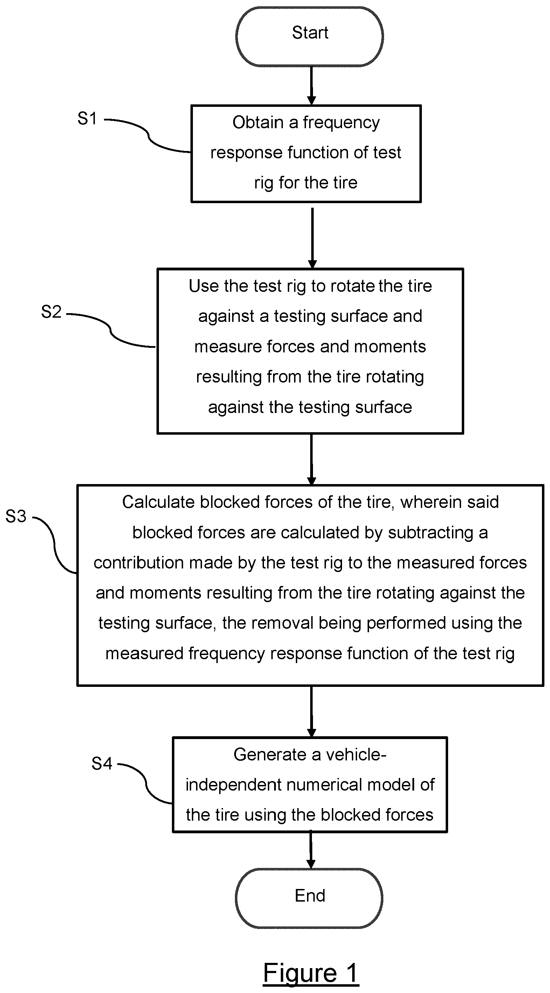

A method according to the present disclosure for generating a vehicle-independent numerical model of a tire for predicting the contribution of structure-borne noise and vibration caused by tire forces and moments to cabin noise in a vehicle under operating conditions including the tire installed on a wheel of the vehicle, will now be described with reference to figures 1 to 3. In this description, cabin noise refers to the structure-borne noise and vibration experienced in the cabin of a vehicle. The numerical model, which may also be referred to as a virtual model, captures properties of the tire which characterize the forces and moments the tire generates in use on a spindle (a term used here to include a rotating axle configured to support a tire) where it is mounted and rotating. The phrase "vehicle under operating conditions" refers to a vehicle when it is being driven (e.g. by an internal combustion engine or an electric motor).

At step S1, a frequency response function (FRF) of a test rig to be used to test a tire are obtained. That is, one or more values of the FRF are found for each of a plurality of (e.g. equally spaced) frequencies spanning a frequency range, e.g. with the highest of the frequencies being above 300 Hz, or above 350 Hz. The Frequency Response Function (FRF) is used to identify the resonant frequencies, damping and mode shapes of a physical structure. It is sometimes referred to as a "transfer function" between the input and output. The test rig comprises a (first) rotatable spindle (typically implemented as a high-stiffness spindle) to which a tire can be connected, and a motor for rotating the spindle. It typically further comprises either a "massive" (large seismic mass) body, that is a body having a mass much higher (e.g. at least 10 times higher, or at least 100 times higher) than the tire, or a connection mechanism for attaching the test rig to such a massive body (e.g. to a floor and/or wall of a room where the test rig is operated). In some test rigs the massive body to which the test rig is attached may be isolated from the floor by dampers and/or springs to further reduce the impact of external forces. In one case the test rig had a concrete foundation of 25 tons, a steel tire stand of 40 tones, spring-dampers support for frequency measurements ranges up to 300 Hz with substantially no resonance, allowing measurements up to 400Hz. The FRF of the test rig (e.g. in the absence of a wheel and tire, though optionally while supporting a wheel and an optional unloaded tire, as discussed elsewhere in this document) is denoted FRF_{rig}.

The test rig further comprises one or more (typically more than one) force sensors, such as sensors to measure translational force(s) and moment(s) exerted at one or more positions of the test rig. For example, the force sensor may measure forces exerted on the spindle. Denoting the axis of the spindle by the y direction, and two mutually transverse axes which are both transverse to the y-axis as x and z, the measured translational forces may be denoted Fₓ, F_{y}, F_{z} and the moments about the axes as Mₓ, M_{y}, M_{z}. Optionally, the test rig may not include force sensors for all of these forces and moments (e.g. M_{y} may not be measured).

The forces and moments measured in step S1 may be collectively denoted F₁. F₁ may be in the (temporal) frequency domain. Thus, the force F₁ may be considered as a vector having a plurality of "force components". Each force component indicates a corresponding measured force (e.g. a force in a specific axial direction) or moment (e.g. a moment about a specific axis) applied to the test rig at a corresponding (temporal) frequency.

Similarly, the test rig includes one or more accelerometers. The output of these may be denoted by A₁ A₁ may be considered as a vector ("structure response") having a plurality of acceleration components. Each acceleration component is indicative of a respective acceleration (e.g. in a corresponding direction) of a corresponding element of the test rig (that is, an element where one of the accelerometers is located, e.g. the first spindle) at a corresponding time. Alternatively, A₁ may be in the (temporal) frequency domain for a corresponding (temporal) frequency. Thus, each acceleration component is indicative of a respective acceleration (e.g. in a corresponding direction) of a corresponding element of the test rig (that is, an element where one of the accelerometers is located, e.g. the first spindle) at a corresponding (temporal) frequency.

In the following, it will be assumed that both F₁ and A₁, and all other measured force vectors and acceleration vectors described below, are in the (temporal) frequency domain. For convenience, it will be assumed that all the force vectors and accelerations use the same set of frequencies to define the frequency domain, i.e. for each one of the set of frequencies, F₁ has a corresponding force component for each force direction or moment direction, and A₁ has a corresponding acceleration component for each direction and each accelerometer.

The test rig may further comprise a further rotatable spindle operative to support a "testing" body presenting a testing surface, and a drive system to rotate the spindle at a selected rotational velocity. The testing body may comprise the tire supported on a wheel mounted on the spindle.

As described below in more detail with reference to step S2, the test rig is operative to support and rotate the wheel and tire on the first rotatable spindle with the tire being pressed against the testing surface, e.g. with a defined pressure (force) between them. However, step S1 may be carried out at a time when the first rotatable spindle is not supporting a tire. At this time, the connection mechanism (if any) may be engaged to connect the test rig to the massive body, and the further rotatable spindle (if any) is optionally not supporting the testing body.

A frequency response function (FRF) relates to how a system responds to input forces of varying frequencies. In other words the FRF quantifies the relationship between the input forces to an object and the data in the frequency domain characterizing the motion of the object. The FRF of the test rig (FRF_{rig}) refers to the FRF of the spindle of the test rig, which connects to the tire via a laminar wheel encircled by the tire, and may already be known (e.g. supplied by the manufacturer) or have been previously measured. In such a case, in step S1 the FRF_{rig} can be retrieved from a database where it is stored.

Alternatively, e.g. if the FRF_{rig} of the test rig is not known, then it may be measured using a variety of known FRF measuring techniques. For example, by mechanical excitation of the test rig using a shaker, or by using an impact generation unit (e.g., a hammer) to apply a short-duration force pulse excitation to the test rig, and measuring the response (motion) at the one or more accelerometers located on the test rig. Virtual point transformation (VPT) and a corresponding optimisation method (both as described later) can then be used to map the response from the one or more accelerometers onto the spindle. The FRF_{rig} of the test rig is denoted by equation (1) below: $FR {F}_{rig} = {A}_{1} / {F}_{1}$ (1)

The FRF_{rig} may be a matrix having elements. Each element corresponds to one of the frequencies, to a corresponding acceleration component of A₁ for that frequency, and to a corresponding force component of F₁ for that frequency. In other words, F₁ may be the input from the hammer or shaker to make the 6 degrees of freedom (DoF) inputs as close as possible to the operational conditions in the rig, and A₁ the corresponding output. The FRF_{rig} may be obtained by applying Eqn. (1) element-wise. That is, each component of FRF_{rig} is obtained by dividing the corresponding acceleration component of A₁ by the corresponding force component of F₁.

After obtaining the FRF of the test rig, the FRF_{rig} can be stored so that the FRF_{rig} can be retrieved when it is needed.

At step S2, a tire is attached to the test rig, and the test rig is operated to rotate the tire against a testing surface (e.g. the surface of another object rotated by the test rig. A force vector, denoted F₂, of forces and moments generated by the tire rotating against a testing surface are measured, using the force sensor(s) of the test rig discussed above. Similarly, an acceleration vector, denoted A₂, is measured using the accelerometer(s) of the test rig discussed above. F₂ and A₂, like F₁ and A₁ and all other force vectors and acceleration vectors discussed below, are composed of force components and acceleration components as defined above, in the frequency domain.

The test rig is any test rig which can be used to drive a tire over a testing surface, as if the tire were attached to a vehicle being driven. Similarly, the testing surface is any surface which can emulate a real-world road surface over which a tire of a vehicle would typically drive. For example, the testing surface may be a Replica Road Surface (RRS). The RRS is defined as a surface having a power spectral density of between 10⁻⁷ to 10⁻¹⁰ m² and more preferably, 10⁻⁷ to 10⁻⁹ m² as measured using a stationary scanning beam across a wavelength range of 10² to 10⁰ m.

This is defined according to linear system theory, when a tire rolling over a road surface transforms spatial irregularities with wavelength L into temporal excitations at frequency f = v/L, where v is the rolling speed. As a practical example, at 50 kph to meet typical driving conditions for target reference in cabin noise, a frequency range of 20 - 400Hz corresponds approximately to surface wavelengths between 3 cm and 70 cm. To reliably capture the full excitation range with statistical relevance, road profile and replica road surface profile measurements should ideally span at least several meters in length to ensure simulation accuracy, within the tire's circumference length.

The test rig and testing surface enable realistic vehicle corner loads and rolling speeds to be applied to the tire so that resultant forces and moments from the tire rotating against the testing surface can be measured. For example, accelerometers on the tire attached to the test rig indirectly detect the forces and moments resulting from the tire rotating against the testing surface.

Optionally, while using the test rig with the tire, real-world driving conditions may be further emulated by maintaining environmental factors around the tire at a constant level. For example, while using the test rig in step S2, at least one of ambient pressure, temperature and humidity may be maintained at a pre-determined level. Other factors that could be controlled could include wind speed and wind temperature of air which is caused to flow over the tire during step S2. Additional conditions include tire pressure and tire temperature. Furthermore, cornering loads and camber can be emulated by adjusting the test surface or the load angle. Advantageously, step S2 allows real rolling conditions to be replicated without interference from full-vehicle effects.

At step S3, "blocked forces" of the tire are calculated. The term "blocked forces" refers to forces generated by a system which are independent of the presence of any other component or system. In the present scenario, the blocked forces of the tire are those which result from the tire rotating against the testing surface and are not influenced by anything to which the tire may be connected (e.g. a wheel hub of a vehicle or a test rig). As mentioned above, although the test rig would ideally be an infinitely rigid receiver for the tire and not impact the measurements of the forces and moments resulting from the tire rotating against the testing surface, in practice this is not the case. As a result, the test rig will contribute to the measured forces and moments F₂ resulting from the tire rotating against the testing surface. Step S3 removes (subtracts) the contributions made by the test rig to the measured forces and moments F₂ resulting from the tire rotating against the testing surface, to obtain an estimate *F_{blocked}* of what the measured forces would be if the test rig were perfect.

For example, *F_{blocked}* may be estimated as ${F}_{blocked} = FR {{F}_{rig}}^{- 1} ∗ {A}_{2}$ (2)

Here *FRF_{rig}*⁻¹ ** A*₂ is an estimate of the blocked forces, compensated from the test rig influence, given the measured acceleration A₂ at step S2. When VPT is used to determine the components of FRF_{rig}, it becomes square and so is invertible. The inverse can then be determined using standard techniques, for example, Gaussian elimination. If VPT is not used and the matrix is not square, the pseudoinverse matrix, also known as the Moore-Penrose inverse, can instead be calculated and used.

That is, step S3 corrects the force data obtained in step S2 to account for the finite mass (i.e. non-infinite inertia) and resonant frequencies of the test rig. This is an improvement on a known technique of transfer path analysis in which the rig is assumed to be an infinitely rigid receiver, which is not the case in practice. Advantageously, step S1 only has to be carried out once (i.e. the FRF of the test rig only needs to be measured once) as the stored FRF result can be used to correct results obtained in multiple instances of step S2, i.e. multiple corresponding tire tests, even if the tires change between tests.

In steps S1 to S3, FRF_{rig} is defined by equation (1) and is dependent on the acceleration detected by the one or more accelerometers across various frequencies. However, FRF_{rig} could instead be calculated by equation (3) shown below: $FR {F}_{rig} = {F}_{1 out} / {F}_{1 in}$ (3)

In the above equation, FRF_{rig} may be a "force-over-force" matrix having elements. Each element corresponds to one of the frequencies, to a corresponding output force component of F₁ₒᵤₜ for that frequency, and to a corresponding input force component of F₁ᵢₙ for that frequency. Using the force-over-force matrix FRF of equation (3) to estimate the blocked forces in step S3 can then be done using the following equation: ${F}_{blocked} = FR {{F}_{rig}}^{- 1} ∗ {F}_{2}$ (4)

As in step S3 described above, *FRF_{rig}*⁻¹ * *F*₂ is an estimate of the blocked forces due to the test rig influence, despite being already mostly stiff and isolated. However, unlike in equation (2) above, it is the measured forces and moments generated by the tire rotating against a testing surface that are used to estimate the blocked forces F_{blocked}. Advantageously, this allows an estimate of blocked forces to be obtained without the requirement of accelerometers.

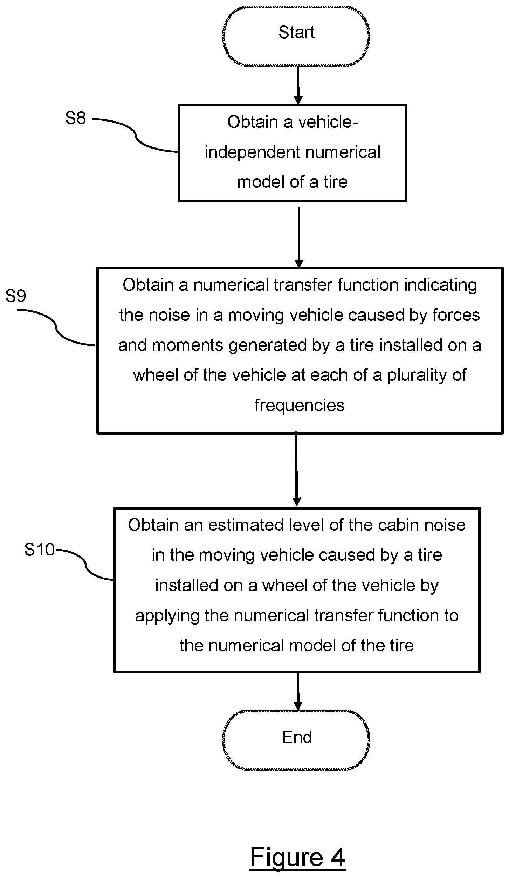

At step S4, the calculated blocked forces of the tire are used to generate a numerical model of the tire. The numerical model of the tire is a model which contains at least information on the blocked forces of the tire. The numerical model may further contain information on the frequency response function of the tire under a variety of conditions (pressure, temperature and humidity) for given combinations of speeds in steady state and variable conditions, a vehicle's weight loads of all four corners, and the tire's camber with slip angle ranges representing the possible vehicle passenger characteristics. Corresponding time information may also be collected with the corresponding forces and moments of the tire. Calculated blocked forces may also be collected for later processing after cleaning. In other words, a numerical model of a tire can be generated using the already calculated blocked forces for the tire determined at a previous point in time. This numerical model can then be used to predict the contribution of the tire to noise in a vehicle including the tire installed on a wheel of the vehicle, by a method explained below with reference to Fig. 4. Advantageously, because the noise can be predicted using a numerical model, tire-induced NVH issues can be predicted prior to assembling a physical prototype for real-world testing. Furthermore, because the contributions of the test rig are subtracted, the accuracy and usability of the numerical model of the tire is increased compared to other numerical models. In other words, step S4 results in a numerical model of a tire that acts as a digital database of blocked forces versus load and speed, applicable to any vehicle configuration. The numerical model of the tire can be used to provide a cleaner (i.e. less noise) ready-to-use source for hub-tire path analysis and auralization (simulating the acoustics of a vehicle) across various loads and speeds.

Furthermore, in the above, when obtaining the FRF of the rig, it is assumed that when a tire is attached to the test rig via a rig spindle and wheel, the wheel is flexible. In this case, the FRF of the wheel itself does not have to be considered provided that the same wheel is used throughout all of the steps involving the test rig. That is, the wheel is, in effect, considered as a portion of the test rig. However, in practice this is not necessarily the case, and so a difference in the attached wheel will also influence the measured forces and moments of a tire attached to the test rig rotating against a test surface. Therefore, as an optional extra step, the FRF of the wheel of the test rig may also be obtained, e.g. from a database or using techniques as described above (using a shaker or an impact hammer tool unit). After obtaining the FRF of the rig with the wheel without tire, denoted *FRF_{rig_wheel_alone},* it can be accounted for and removed when calculating the blocked forces of the tire in equation (4) by further removing (*FRF*_{*rig_wheel*_*alone*})⁻¹ * *F*₂ in equation (4). From another point of view, an updated FRF_{rig_wheel_alone} of the wheel may optionally be defined by updating the FRF_{rig} obtained explained as above to incorporate the *FRF_{rig-wheel-alone}* in free-loaded or fixed-spindle conditions. If so, this updated form of FRF_{rig} may be used as the FRF_{rig} referred to below.

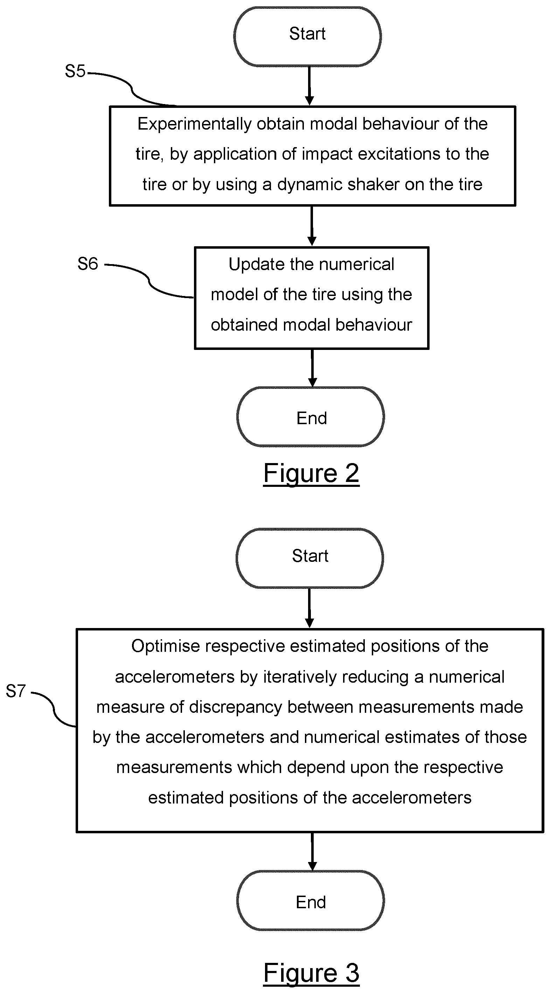

The numerical model of the tire may be further improved according to the method of figure 2.

At step S5 of figure 2, the modal behaviour of the tire is experimentally obtained. The term "modal behaviour" of the tire refers to the normal modes of the tire and is obtained using a method similar to the method of obtaining the transfer response function of the test rig. Specifically, a shaker may be used on the tire, and/or an impact generation unit may be used to apply impact excitations to the tire. When this is done, the test rig may measure an acceleration vector As and a force vector F₅,, both having, respectively, acceleration components and force components as explained above.

The modal behaviour may be denoted by FRFₜᵢᵣₑ, or equivalently (A/F)_{wheel}. FRFₜᵢᵣₑ is a matrix having, for each frequency, a respective component for each acceleration component of As and each force component of F₅. Each component of (A/F)_{wheel} is obtained from the corresponding component of As and F₅. That is, ${\left(\frac{A}{F}\right)}_{wheel} = \frac{{A}_{5}}{{F}_{5}} ,$ (5) calculated element-wise, as defined above.

It is important to note that a tire's nonlinear transfer behaviour (FRF) is known to vary with corner load - a dependency often overlooked in classical CTPA formulations, which typically rely on free-free conditions or one load but in an unassembled condition. Here, "free-free" conditions refer to a situation where a structure or system is not constrained or supported in any way, allowing it to move and deform freely. This means that no external forces or moments are acting on the edges or boundaries of the structure, and the system is not fixed or pinned in place. The first "free" means that the wheel is not connected to a spindle (i.e. "unassembled"), but only to an apparatus which applies the force; this means the wheel is not affected by lack of rigidity of the spindle, but the spindle has the advantage that the tire can be rotated. The second "free" means unloaded boundary conditions. An example of a free-free experimental setup is a tire suspended from a ceiling by a cord. Impact excitations can then be applied to the tire, for example by a hammer. The tire may also be under a spindle-loaded condition in which the tire is connected to the spindle. However, as mentioned above the spindle is not a perfectly rigid connector and so will affect the measured modal behaviour. To remove the impact of a corner load from the calculated modal behaviour of the tire, in step S5 the tire is preferably under loaded conditions, also referred to as simulated load conditions. Furthermore, to remove the influence of the spindle, the tire is preferably not connected to the spindle. Therefore, the tire is preferably in a "free but loaded" condition, also called free-loaded. Here, "free but loaded condition" refers to the tire being unassembled and under simulated load conditions in which a force is applied to the tire. The load may be simulated on the tire using any means that results in a force acting through the tire that is similar to what the tire would experience when supporting the weight of a vehicle to which it is fitted, for example, by use of one or more cables through the hub bore of the tire. In other words, the modal behaviour is obtained by performing real world experiments under simulated load conditions. The loading can include a component which is vertical (i.e. in the radial direction of the tires), and optionally one which is lateral (i.e. parallel to the rotational axis of the tired).

Once the modal behaviour is obtained, at step S6, the numerical model of the tire is updated based on FRFₜᵢᵣₑ, to obtain an updated (richer) frequency response function characterizing the modal behaviour. This constitutes an enhanced numerical model of the tire. Advantageously, updating the numerical model of the tire with its modal behaviour results in a more accurate numerical model of the tire, leading to more accurate noise predictions when using the numerical model. Furthermore, the obtained modal behaviour from step S5 may also be used when determining the blocked forces of the tire by facilitating the isolation and removal of the influence of the test rig when measuring forces and moments generated by the tire rotating against the testing surface.

Note that in S5, as explained above, the modal behaviour of the tire may be obtained using a shaker on the tire and/or by application of impact excitations to the tire when the tire is not rotating. However, modal behaviour could alternatively be determined while the tire is rotating. In such a scenario, step S5 of experimentally obtaining the modal behaviour of the tire could occur at the same time as step S2 when the tire is fitted to the test rig and rotated against the testing surface. Advantageously, determining modal behaviour of the tire at the same time as the forces and moments of the tire resulting from the tire rotating against the testing surface makes it easier and faster to generate the numerical model of the tire.

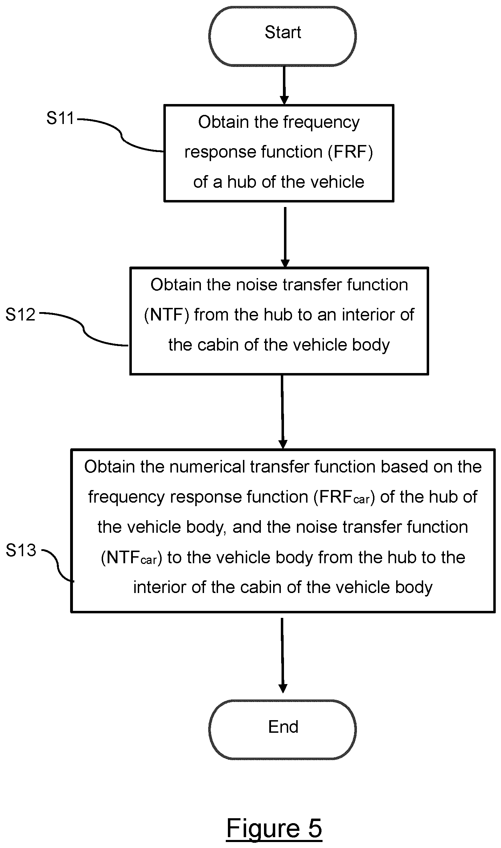

As noted, A₁, A₂ and A₅ may be measured by one or more accelerometers fitted to the tire or test rig, for example, accelerometers. It is noted that when using sensors such as accelerometers, their position must be known to within a very small tolerance, so that the correct transformations can be applied to use the data that they collect. Such transformations are required for virtual point transformation (VPT) which would map forces and moments experienced at one point of the tire to another point which may not be possible to measure with sensors, for example, the hub bore. A problem that occurs is that even when precision machinery is used for accurate mounting of the sensors, there is often an element of error in the placement of sensors, both in the location and in the orientation of the sensor. A way of estimating and optimising the estimation of the positions of the sensors (a term used here to include both location and orientation of the sensors) is described with reference to figure 3. Figure 3 shows a method, including a step S7, which can be used as part of the steps S1, S2 and S5 (and also as part of step S12 of Figure 5, explained below), to obtain one or more improved estimated positions of the one or more accelerometers. In this method, the respective estimated position of the each of the accelerometers is optimised by iteratively reducing a numerical measure of discrepancy between measurements made by the accelerometers and numerical estimates of those measurements which depend upon the respective estimated positions of the accelerometers.

For example, in the case of performing S7 as part of S5, a loss function may be defined which is indicative of a discrepancy between the measurements As made by the accelerometers, and an estimate of those measurements based on current estimates of the positions of the accelerometers. The loss function may for example represent a Euclidean distance between the measurements As and the estimates of the measurements. Optionally, the discrepancy function can also be a function of excitations applied to the tire by the shaker and/or image generation unit, and/or may depend on the measured forces F₅.

Then the loss function may be iteratively reduced in a computational process with respect to the estimated positions of the accelerometers, e.g. to obtain in successive iterations updated estimates for one or more of the positions of the accelerometers such that the loss function is reduced. Many numerical algorithms are known to minimise a loss function with respect to its numerical parameters, in this case the estimated positions of the accelerometers.

The numerical estimate of the measurement made by any given accelerometer (e.g. a "first" accelerometer) may be obtained using the measurements made by at least one other "second" one of the accelerometers, and a calculated transfer function from the estimated position of the second accelerometer to the estimated position of the first accelerometer. This process can then be repeated for the various accelerometers.

A way of verifying initial data quality with FRFs is the reciprocity assumption among sensor positions. In the context of FRFs, the reciprocity assumption states that the transfer function between two degrees of freedom (DOF) remains the same if we switch the input and output. For example, if we excite a structure at point A and measure the response at point B, the resulting FRF should be the same as if we excited the structure at point B and measured the response at point A. The input location precision between two accelerometers (e.g. following the iterative procedure) is checked by using the measurements obtained at the two accelerometers to calculate the transfer function from a first of the two accelerometers to a second of the two accelerometers, and also to calculate the transfer function from the second accelerometer to the first accelerometer. If the transfer functions satisfy the reciprocity assumption of each other (to within a low tolerance), then the estimated locations of those two accelerometers are correct (again to within a low tolerance). Advantageously, the above optional steps minimise mechanical mounting errors of sensors and prevents the use of poor-quality data. Furthermore, verifying that the sensors exhibit improved reciprocity can improve the fidelity of the model representation at the virtual point (in step S5). In essence, step S7 can reinforce transformation robustness and test repeatability, enabling more consistent modal behaviour across tire tests and tighter correlation with virtual finite element models.

An alternative method to optimise the estimated position of the accelerometers is as follows. For each of the estimated positions of each of the accelerometers, and in each of a pluralty of iterations, the transformation from each of the estimated positions to the center of the wheel is obtained. Each iteration recalculates the transformed FRF based on small perturbations in the position (location and orientation with 6 degrees of freedom) of the accelerometers and their various combinations, to compare the reciprocity quality of FRFs, Frequency Response Assurance Criterion (FRAC), auto-phase assurance criteria (PAC), rigidity or responses and references. The optimal FRFₜᵢᵣₑ found in this way is used as described below.

While the above description of step S5 details how to obtain the modal behaviour of the tire by performing real world experiments under simulated load conditions, an alternative method for obtaining the modal behaviour of the tire is also provided. In this alternative method, the modal behaviour of the tire is obtained by virtually modelling the tire, for example, by using design data for the tire, applying a virtual load to the tire, and then using the model to determine the modal behaviour of the tire by applying a virtual shake or impact to the tire. In other words, the modal behaviour of the tire can be obtained under virtual experimental load conditions.

A method of estimating a level of noise in a moving vehicle at each of a plurality of frequencies will now be described with reference to figures 4 and 5.

At step S8 of figure 4, a numerical model of a tire is obtained. The numerical model may be generated according to the method of steps S1-S4, described above, optionally additionally including steps S5-S6 (and further optionally performing the optimisation of S7 when including S6) described above. Alternatively, in the case that the numerical model has already been generated, it may be retrieved from wherever it is stored, such as in a hard drive or cloud storage.

As another option, the numerical model for the tire may be generated virtually (that is, computationally, substantially without experiment on a real-world tire) based on design data for the tire. Such generation may involve simulating the test rig and the testing surface as well as the tire using its known properties (e.g. composition, dimensions, weight). A simulation of the test rig with the tire could then be run to virtually determine the forces and moments resulting from the tire rotating on the simulated testing surface, and once the blocked forces of the simulated tire were determined, they could then be used to generate a vehicle-independent numerical model of the tire for predicting the contribution of the tire to noise in a vehicle including the tire installed on a wheel of the vehicle.

In a vehicle, it is very common for each tire to experience different load conditions, due to distribution of load in the vehicle, motion of the vehicle (e.g., when turning), and road surface (e.g., cambered/inclined). Therefore, the method may further comprise selecting, within the numerical model, a respective representation of a tire for each of the four corner positions of the vehicle, under corresponding suspension geometry mounting, load, and dynamic conditions, so as to improve the accuracy of the predicted vehicle response.

At step S9 of figure 4, a numerical transfer function is obtained which indicates the noise in the moving vehicle including the tire installed on a wheel of the vehicle at each of a plurality of frequencies. As with the numerical model of the tire, in the case that the numerical transfer function has already been calculated and stored, it may be retrieved from wherever it is stored, such as in a hard drive or cloud storage.

Alternatively, in step S9 the numerical transfer function may be obtained according to the method of figure 5. At step S11 of figure 5, the FRF of a hub that will connect the tire to the vehicle body can be obtained according to techniques similar to those previously mentioned in the present application, based on measurements A₁₂ of the acceleration of at least one point on the hub (e.g. a rotational centre of the hub) given measured forces and moments (F₁₂) at the centre point of the hub which connects to the vehicle body. For example, similar to step S5 of figure 2, a shaker or impact generation unit may be used to apply vibrations or excitations directly to the vehicle hub. Accelerometers and force sensors can then be used to detect the resulting acceleration, forces and moments, and virtual point transformation can then be used to calculate the forces and moments acting through the centre of the hub. Optimisation of estimates of the position of the accelerometers, as explained above with reference to Fig. 3, may also be performed to ensure accurate estimation of the position (location and orientation) of the accelerometers and accurate calculation of the forces and moments. From the measured acceleration vector A₁₂ (transfer) and the measured forces and moments (force vector, F₁₂) to the centre point of the hub which connects to the vehicle body, the FRF can then be calculated. The FRF can be denoted FRF_{car} (or (A/F)_{car}). FRF_{car} is again a matrix having, for each frequency, a component for each corresponding acceleration component of A₁₂ and each corresponding force component of F₁₂, and being the element-wise ratio of the corresponding components of A₁₂ and F₁₂ for that frequency.

At step S12, pressures (noise levels) at one or more locations of the vehicle (e.g. inside the cabin of the vehicle) are measured. This data may be presented in the frequency domain in the form of a vector P₁₃ having components which each indicate the air pressure variation (noise level) for a corresponding location and a corresponding frequency. Similarly, a force vector F₁₃ is measured of the forces on the hub. As above, force vector F₁₃ is made up of force components, each corresponding to a force direction/moment direction and a respective frequency. From these measurements, a noise transfer function NTF_{car} from the hub to the vehicle body, and in particular, the cabin of the vehicle body, can be obtained. NTF_{car}, which may alternatively be denoted (*P*/*F*)*_{car},* is a matrix having, for each frequency, a component for each location in the vehicle and each force component of force vector F₁₃. NTF_{car} is given by equation (6) below, where the evaluation is performed element-wise: $NT {F}_{car} = {P}_{13} / {F}_{13}$ (6)

P₁₃ and F₁₃ can be measured, for example, when the excitations are applied during step S12. Sensors such as microphones are placed at the points of interest (such as in the cabin of the vehicle body where a passenger would sit) and measure the noise that reaches the microphone as a result of the shaker or impact excitations.

Alternatively, both the frequency response function FRF_{car} and the noise transfer function NTF_{car} could be obtained by a computer-aided engineering (CAE) from the OEM.

The numerical transfer function of a vehicle may be obtained experimentally by using an impact test or shaker, and a plurality of accelerometers installed on each knuckle and hub areas close to each spindle of the vehicle, and microphone and accelerometers used as targets in a cabin of the vehicle. The tires can be removed from the vehicle, suspending the vehicle by its hub to represent a free-free condition of the vehicle. At the same time, its suspension remains loaded with its weights in each corner. In a subsequent step, the accelerometers may be removed from the hub area only to allow the tires to be reassembled. In contrast, the plurality of the same accelerometers from obtaining the modal behaviour remain installed in the knuckles area to capture acceleration data under driving conditions. The method may use this operational response vibration response, in combination with the measured transfer function in the hub (FRF_{car}) by indirect methods to calculate forces. This indirect approach, also referred to in the field of operational force reconstruction, enables the correlation and validation of the full transfer path model without requiring direct force measurement in the vehicle.

In parallel with dynamic measurements at the hub, one or more accelerometers and microphones may be positioned at interior cabin locations or selected points in the vehicle cabin to record the vibration and acoustic response of the vehicle. These measurements represent the vehicle's in-cabin reference responses as well as the tire's contact forces and moments under real operating conditions. The method may compare the reconstructed operational contact forces and moments obtained via indirect methods (e.g., driving the car on a track) with the blocked forces and moments predicted by the equivalent numerical model of the tire, taking into account the modal characteristics of both the tire and the hub. This comparison enables validation of the tire's equivalent contact accuracy from the blocked forces method.

In some instances, either one or both of the frequency response function FRF_{car} of the hub and the noise transfer function NTF_{car} from the hub to the vehicle body may already be known, for example, if the FRF_{car} of the hub was previously measured. In such a case, the FRF_{car} or the NTF_{car} may instead be retrieved from where it is stored, such as in a hard drive or cloud storage.

Alternatively, either one or both of the frequency response function FRF_{car} of the hub and the noise transfer function NTF_{car} from the hub to the vehicle body may be determined by virtually modelling the vehicle body, for example, by using design data for the vehicle body with a virtual load applied. The model can then be used to determine either one or both of the frequency response function FRF_{car} of the hub and the noise transfer function NTF_{car} from the hub to the vehicle body by applying a virtual shake or impact at the virtual hub of the vehicle body.

At step S13, the numerical transfer function can be obtained based on the frequency response function (FRF_{car}) of the hub of the vehicle body, and the noise transfer function (NTF_{car}) to the vehicle body from the hub to the interior of the cabin of the vehicle body.

The numerical transfer function is a function which considers both the frequency response function FRF and the noise transfer function NTF to estimate the structure-borne noise and vibration in the cabin of a car i.e., the cabin noise. The cabin noise estimated using the numerical transfer function is given by equation (7) below: ${P}_{SBN} = \left[NT{F}_{Car}∗{\left(\left(FR{F}_{Tire}-FR{F}_{rig}\right)+FR{F}_{Car}\right)}^{- 1}∗\left(FR{F}_{Tire}-FR{F}_{rig}\right)\right] ∗ {F}_{Blocked}$ (7)

Advantageously, as seen in equation (7) above, in addition to considering both the frequency response function FRF and the noise transfer function NTF to estimate the structure-borne cabin noise in a car, the numerical transfer function also accounts for the contribution from the test rig and removes it from the estimation regardless if modal behaviour of the tire are in free-loaded static or spindle-loaded rolling conditions, resulting in a more accurate estimation of the structure-borne noise and vibration in the cabin of the a car.

Returning to Figure 4, step S10 is to evaluate this function, separately for each of the frequencies, thereby estimating a level of noise in the moving vehicle at each of the plurality of frequencies. That is, the numerical transfer function is used to obtain an estimated level of noise by applying the numerical transfer function to the numerical model of the tire, represented by F_{blocked}. The numerical model of the tire is used to estimate the forces and moments resulting from the tire rotating over a surface, and the numerical transfer function estimates the resulting noise from said forces and moments which are transferred through the hub to the vehicle body.

The process of Fig. 4 may be carried out for each of the wheels of the vehicle in turn using, in step S9, a corresponding numerical transfer function for the wheel. Each time the method of Fig. 8 is carried out for a corresponding wheel of the vehicle, it would be use in step S8 a corresponding vehicle-independent numerical model of the tire installed on that wheel. The estimated level of noise for each of the wheel obtained in the four instance of step S10 can then be added, to give the total cabin noise.

For example, if tires of a first type (a "first tire" and a "second tire") are installed on the front wheels of the vehicle, the method of Fig. 4 can be performed twice using the vehicle independent numerical model of the first type of tire in each step S8, and using the respective numerical transfer function of a corresponding one of the front wheels in step S9. If tires of a second type (a "third tire" and a "fourth tire"), which may be different from the first type of tire, are installed on the real wheels of the vehicle, the method of Fig. 4 can be performed twice more using the vehicle independent numerical model of the second type of tire in each step S8, and using the respective numerical transfer function of a corresponding one of the rear wheels in step S9. This gives four corresponding estimates of generated noise in the cabin at each given frequency (i.e. one estimate for each wheel), and the four estimates are added to give the total cabin noise at that frequency.

This method enables the philosophy of component-based transfer path analysis to be extended to tires, though historically it was limited to static parts of a vehicle that may rotate internally on their internal mechanisms as the source. Advantageously, a noise estimate for a vehicle can be obtained without requiring real-world testing of the tire attached to the vehicle body when a numerical model of the tire is available.

Current state of the art C-TPA comparisons have shown a correlation between the predicted sound pressure level (SPL) and the measured SPL. However, typically, a correlation is only seen for a limited range of speeds and frequencies. For example, "Vehicle road noise prediction using component-based transfer path analysis from tire test-rig measurements on a rolling tire" by Jesús Ortega Almirón et al. tests at 20 kph to reduce nonlinearities and increase repeatability. However, the correlation between the C-TPA prediction and the on-track testing is lost for greater speeds and different FRFs are ignored depending on the frequency range to make the prediction fit the measured data.

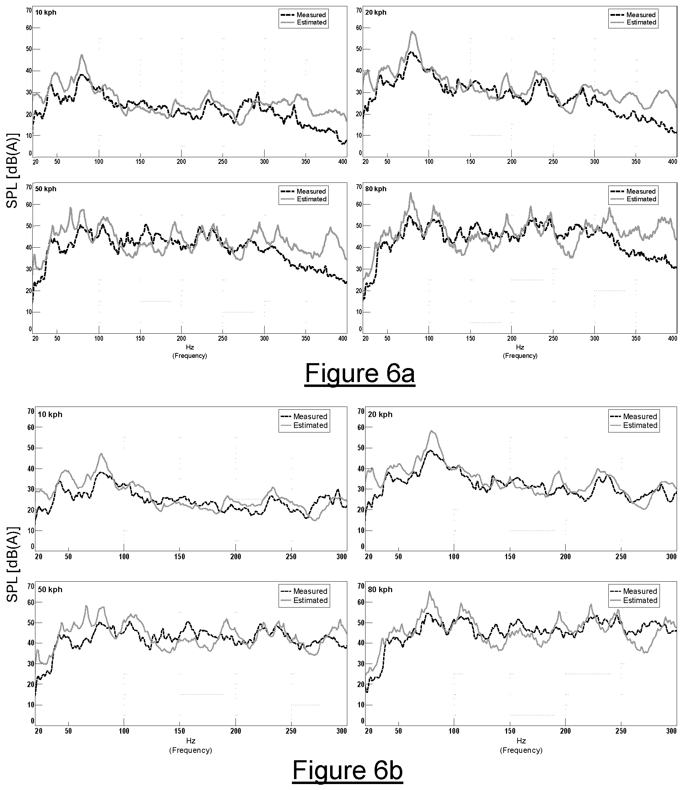

By contrast, Figures 6and 6b show a comparison between the predictions made using an example of the techniques described above with reference to Figs. 1 to 5 ("embodiment") and lab based measurements and measurements taken by driving the car and tire for which noise predictions were made on a track (track-based). Figure 6b shows a narrower range of frequency (20Hz to 300Hz) than Figure 6a (20Hz to 400Hz). Each show four different vehicle speeds (10kph, 20kph, 50kph and 80kph). The virtual model of the tire used in the lab-based prediction was generated according to the methods described in the present disclosure and the car in question was a Volkswagen Golf 8 1.0 TSI 81KW/110CV. (ICE, Gasoline, three cylinder, Manual Transmission - 6 gears), and the tire was one having reference 205/55R16. The results of figure 6a and 6b show a good correlation between the track-based measurements and the embodiment of the present disclosure that extends far beyond 20 kph, with a maximum measured speed of 80 kph and the frequency reaches up to 400 Hz without requiring selection of which FRF to use and which to ignore. Therefore, embodiments of the present invention make possible a method for generating a virtual model of a tire which can be used to more reliably predict the noise in a vehicle including the tire installed on a wheel of the vehicle across a much broader range of speeds than previously seen. The virtual model may be implemented as a finite element-based model.

After step S10 as described above, a level of noise is estimated in the moving vehicle at each of the plurality of frequencies. This estimation can optionally be validated by driving the vehicle with the attached tire on a road surface at a variety of speeds. The measurements of the accelerometers on the hub and the microphones in the vehicle body can ensure accuracy of the estimated level of noise. Furthermore, optionally, the vehicle can be driven to obtain measurements of contact forces across a plurality of frequencies, and this can be compared with the estimated forces including the blocked forces of the tire and the determined FRFₜᵢᵣₑ.

Note that if the method of Fig. 4 was carried out using a virtual vehicle-independent numerical model of the tire (i.e. if step S8 was carried out using a numerical model based on design data, rather than one obtained by the method of Fig. 1), then the validation of the estimation confirms the accuracy and usefulness of the virtual vehicle-independent numerical model.

Once the present method has been validated (whether using a vehicle-independent numerical model obtained by the method of Fig. 1, or one obtained otherwise, e.g. virtually based on design data), the method of Fig. 4 may be carried out a second time, using a second (different) vehicle to obtain information for the second vehicle in step S9. This second performance of the method of Fig. 4 reuses the numerical model of the tire which was obtained in step S8 on the first occasion that the method of Fig. 4 was performed. This promotes accurate NVH predictions early in the design process for a new tire (e.g. before any tire according to the design data has been fabricated), so that tire designs which produce excessive noise can be discarded.

For example, a tire design process may include generating multiple candidate tire designs as design data; for each candidate tire design obtaining a corresponding numerical model; estimating a level of noise in use for the candidate tire design using a method according to Fig 4; eliminating one or more of the candidate tire designs based on the estimated level of noise (e.g. one(s) for which the estimated level of noise is highest (e.g. above a threshold); and fabricating one or more of the candidate tire designs which were not eliminated. Furthermore, once the blocked forces and modal behaviour of a tire are determined (steps S3 and S5 optionally with S7), these steps do not require repeating and can be stored for later use.

Many variations of the methods described above are possible. For example, optionally, a procedure can be performed to improve a numerical model of a tire using measured forces for a real-life realisation of the tire. For example, a numerical model of a tire can be obtained, such as by a method according to steps S1-S6 of Figs. 1 and 2 and optionally further including step S7 of figure 3. Then, using a frequency response function for a hub of a vehicle(such as one previously obtained as explained above with reference to step S12), a prediction can be made of forces (e.g. contact forces) experienced by the tire and/or vehicle hub. A real-world experiment can then be performed using the tire described by the numerical model and the vehicle with the hub for which the frequency response function is known, to obtain observed forces on the tire and/or vehicle hub. A method can then be carried out in which, in each of one of more steps, the numerical model of the tire is successively modified to reduce (e.g. iteratively) a loss function characterizing discrepancy between the predicted forces and the observed forces. In this way, the numerical model of the tire can be (e.g. iteratively) improved. This aligns the virtual model with the real-life tire. Optionally, the frequency response function for the hub also may be iteratively improved in this process.

The improved numerical model - which remains vehicle-independent - may then be used in a process such as the one shown in Fig. 4 using a numerical transfer function (such as one obtained as explained above using the method of Fig. 5) for a second vehicle which is different from the vehicle which was used to obtain the improved numerical model, to obtain estimated noise at each of a number of frequencies for the second vehicle.

Advantageously, the disclosed method enables accurate prediction of structure-borne noise and vibration in the cabin of a vehicle across a wide range of frequencies. While known methods of noise estimation are only accurate for speeds of around 20 kph and frequencies up to 300 Hz, the disclosed method allows for accurate predictions for speeds of up to 80 kph and/or frequencies of up to 400 Hz. The frequency responses discussed in this document preferably include some or all of the range from 0 to 400 Hz, more preferably including a plurality of frequencies in the range 200 to 400 Hz, and even more preferably a plurality of frequencies in the range 300 to 400 Hz.

Some of the concepts disclosed by the present application can be expressed by the following clauses:
1. A method for generating a vehicle-independent numerical model of a tire for predicting a contribution of structure-borne noise and vibration caused by tire forces and moments to cabin noise in a vehicle under operating conditions in which the tire is installed on a wheel of the vehicle, the method comprising:
   obtaining a frequency response function (FRFrig) of a test rig for the tire;
   using the test rig to rotate the tire against a testing surface and measuring forces and moments resulting from the tire rotating against the testing surface;
   calculating blocked forces of the tire, wherein said blocked forces are calculated by subtracting a contribution made by the test rig to the measured forces and moments resulting from the tire rotating against the testing surface, said removal being performed by using the measured frequency response function of the test rig; and generating a vehicle-independent numerical model of the tire using the blocked forces.
2. The method of clause 1, further comprising measuring the frequency response function (FRFrig) of the test rig experimentally.
3. The method of clause 1, wherein the frequency response function (FRFrig) of the test rig is received from a database.
4. The method of any one of clauses 1 to 3, wherein
   the testing surface of the surface in contact with the tire is a replica road surface (RRS).
5. The method of any one of clauses 1 to 4, further comprising
   maintaining at least one of tire pressure, tire temperature, air temperature or air humidity at a pre-determined value during said measurement of the forces and moments resulting from the tire rotating against the testing surface.
6. The method of any one of clauses 1 to 5, further comprising
   obtaining modal behaviour of the tire,
   updating the numerical model of the tire using the obtained modal behaviour.
7. The method of clause 6, wherein
   the modal behaviour of the tire is obtained by performing real world experiments.
8. The method of clause 7, wherein
   the real-world experiments are performed when the tire is under free-loaded conditions or under fixed-loaded conditions.
9. The method of any one of clauses 6 to 8 in which the modal behaviour is obtained by application of impact excitations to the tire or by using a dynamic shaker on the tire, .
10. The method of any of clauses 6 to 9, wherein
   the tire modal behaviour is measured using a plurality of accelerometers located on a wheel assembly of the tire, and the method further comprises:
   optimising respective estimated positions of the accelerometers by iteratively reducing a numerical measure of discrepancy between measurements made by the accelerometers and numerical estimates of those measurements which depend upon the respective estimated positions of the accelerometers,
   wherein the numerical estimate of the measurements made by a given first one of the accelerometers is obtained using the measurements made by a second of the accelerometers and a calculated transfer function from the estimated position of the second accelerometer to the estimated position of the first accelerometer.
11. The method of clause 6, wherein
   the modal behaviour of the tire is obtained under virtual experimental load conditions.
12. A method of estimating structure-borne noise and vibration in a cabin of a moving vehicle at each of a plurality of frequencies, comprising:
   obtaining a vehicle-independent numerical model of a tire;
   obtaining a numerical transfer function indicating the noise in a moving vehicle caused by forces and moments generated by a tire installed on a first wheel of the vehicle at each of the plurality of frequencies; and
   obtaining the estimated level of the cabin noise in the moving vehicle caused by the tire installed on the first wheel of the vehicle by applying the numerical transfer function to the numerical model of the tire.
13. The method of clause 12, the method further comprising:
   obtaining a second numerical transfer function indicating the noise in the moving vehicle caused by forces and moments generated by a tire installed on a second wheel of the vehicle at each of the plurality of frequencies; and
   obtaining the estimated level of the cabin noise in the moving vehicle caused by the tire installed on the second wheel of the vehicle by applying the second numerical transfer function to the numerical model of the tire.
14. The method of any of clauses12 to 13, further comprising:
   obtaining a third numerical transfer function indicating the noise in the moving vehicle caused by forces and moments generated by the tire installed on a third wheel of the vehicle at each of the plurality of frequencies; and
   obtaining the estimated level of the cabin noise in the moving vehicle caused by the tire installed on the third wheel of the vehicle by applying the third numerical transfer function to the numerical model of the tire.
15. The method of any clauses 12 to 14, further comprising:
   obtaining a fourth numerical transfer function indicating the noise in the moving vehicle caused by forces and moments generated by a tire installed on a fourth wheel of the vehicle at each of the plurality of frequencies; and
   obtaining the estimated level of the cabin noise in the moving vehicle caused by the tire installed on the fourth wheel of the vehicle by applying the fourth numerical transfer function to the numerical model of the tire.
16. The method of any one of clauses 12 to 15, wherein the vehicle-independent numerical model of the tire is generated according to the method of any one of clauses 1 to11.
17. The method of any one of clauses 12 to 15, wherein the vehicle-independent numerical model of the tire is one generated computationally based on design data for the tire.
18. The method of any one of clauses 12 to 15, wherein the vehicle-independent numerical model of the tire is received from a database.
19. The method of any one of clauses 12 to 18, wherein the numerical transfer function is obtained by:
   obtaining the frequency response function (FRFcar) of a hub of the vehicle;
      obtaining the noise transfer function (NTFcar) from the hub to an interior of the cabin of the vehicle body; and
   obtaining the numerical transfer function based on the frequency response function (FRFcar) of the hub of the vehicle body, and the noise transfer function (NTFcar) to the vehicle body from the hub to the interior of the cabin of the vehicle body.
20. The method of clause 19, wherein
   impact excitations are applied to the vehicle body at one or more hubs of the vehicle body to measure at least one of the frequency response function (FRFcar) of the one or more hubs and the noise transfer function (NTFcar) to the interior of the cabin of the vehicle body from the one or more hubs.

## Claims

1. A method for generating a vehicle-independent numerical model of a tire for predicting a contribution of structure-borne noise and vibration caused by tire forces and moments to cabin noise in a vehicle under operating conditions in which the tire is installed on a wheel of the vehicle, the method comprising:
obtaining a frequency response function (FRF_{rig}) of a test rig for the tire;
using the test rig to rotate the tire against a testing surface and measuring forces and moments resulting from the tire rotating against the testing surface;
calculating blocked forces of the tire, wherein said blocked forces are calculated by subtracting a contribution made by the test rig to the measured forces and moments resulting from the tire rotating against the testing surface, said removal being performed by using the measured frequency response function of the test rig; and
generating a vehicle-independent numerical model of the tire using the blocked forces.

2. The method of claim 1, further comprising measuring the frequency response function (FRF_{rig}) of the test rig experimentally.

3. The method of claim 1, wherein the frequency response function (FRF_{rig}) of the test rig is received from a database.

4. The method of any one of claims 1 to 3, wherein
the testing surface of the surface in contact with the tire is a replica road surface (RRS).

5. The method of any one of claims 1 to 4, further comprising
maintaining at least one of tire pressure, tire temperature, air temperature or air humidity at a pre-determined value during said measurement of the forces and moments resulting from the tire rotating against the testing surface.

6. The method of any one of claims 1 to 5, further comprising
obtaining modal behaviour of the tire,
updating the numerical model of the tire using the obtained modal behaviour.

7. The method of claim 6, wherein
the modal behaviour of the tire is obtained by performing real world experiments.

8. The method of claim 7, wherein
the real-world experiments are performed when the tire is under free-loaded conditions or under fixed-loaded conditions.

9. The method of any one of claims 6 to 8 in which the modal behaviour is obtained by application of impact excitations to the tire or by using a dynamic shaker on the tire,

10. The method of any of claims 6 to 9, wherein
the tire modal behaviour is measured using a plurality of accelerometers located on a wheel assembly of the tire, and the method further comprises:
optimising respective estimated positions of the accelerometers by iteratively reducing a numerical measure of discrepancy between measurements made by the accelerometers and numerical estimates of those measurements which depend upon the respective estimated positions of the accelerometers,
wherein the numerical estimate of the measurements made by a given first one of the accelerometers is obtained using the measurements made by a second of the accelerometers and a calculated transfer function from the estimated position of the second accelerometer to the estimated position of the first accelerometer.

11. The method of claim 6, wherein
the modal behaviour of the tire is obtained under virtual experimental load conditions.

12. A method of estimating structure-borne noise and vibration in a cabin of a moving vehicle at each of a plurality of frequencies, comprising:
obtaining a vehicle-independent numerical model of a tire;
obtaining a numerical transfer function indicating the noise in a moving vehicle caused by forces and moments generated by a tire installed on a first wheel of the vehicle at each of the plurality of frequencies; and
obtaining the estimated level of the cabin noise in the moving vehicle caused by the tire installed on the first wheel of the vehicle by applying the numerical transfer function to the numerical model of the tire.

13. The method of claim 12, the method further comprising:
obtaining a second numerical transfer function indicating the noise in the moving vehicle caused by forces and moments generated by a tire installed on a second wheel of the vehicle at each of the plurality of frequencies; and
obtaining the estimated level of the cabin noise in the moving vehicle caused by the tire installed on the second wheel of the vehicle by applying the second numerical transfer function to the numerical model of the tire.

14. The method of any of claims12 to 13, further comprising:
obtaining a third numerical transfer function indicating the noise in the moving vehicle caused by forces and moments generated by the tire installed on a third wheel of the vehicle at each of the plurality of frequencies; and
obtaining the estimated level of the cabin noise in the moving vehicle caused by the tire installed on the third wheel of the vehicle by applying the third numerical transfer function to the numerical model of the tire.

15. The method of any claims 12 to 14, further comprising:
obtaining a fourth numerical transfer function indicating the noise in the moving vehicle caused by forces and moments generated by a tire installed on a fourth wheel of the vehicle at each of the plurality of frequencies; and
obtaining the estimated level of the cabin noise in the moving vehicle caused by the tire installed on the fourth wheel of the vehicle by applying the fourth numerical transfer function to the numerical model of the tire.

16. The method of any one of claims 12 to 15, wherein the numerical transfer function is obtained by:
obtaining the frequency response function (FRF_{car}) of a hub of the vehicle;
obtaining the noise transfer function (NTF_{car}) from the hub to an interior of the cabin of the vehicle body; and
obtaining the numerical transfer function based on the frequency response function (FRF_{car}) of the hub of the vehicle body, and the noise transfer function (NTF_{car}) to the vehicle body from the hub to the interior of the cabin of the vehicle body.
